Europäisches Patentamt

European Patent Office

Office européen des brevets

(19)

(11) Publication number: **0 130 790**
**A1**

(12) **EUROPEAN PATENT APPLICATION**

(21) Application number: **84304374.6**

(22) Date of filing: **27.06.84**

(51) Int. Cl.⁴: **F 16 L 21/04, F 16 L 25/00**

(30) Priority: **27.06.83 ZA 834654**
**27.06.83 ZA 834656**
**27.06.83 ZA 834657**

(43) Date of publication of application: **09.01.85**
**Bulletin 85/2**

(84) Designated Contracting States: **AT BE CH DE FR GB IT LI LU NL SE**

(71) Applicant: **HONDA HOMES HOLDINGS (PROPRIETARY) LIMITED, 1103 Medical Arts Building 220 Jeppe Street, Johannesburg (ZA)**

(72) Inventor: **Welgemoed, Gerald Martin, 24 Julia Road, Meadowbrook Germiston (ZA)**

(74) Representative: **Boon, Graham Anthony et al, Elkington and Fife High Holborn House 52/54 High Holborn, London, WC1V 6SH (GB)**

(54) **Connectors.**

(57) The invention relates to a connector (110) for connecting together in sealed manner two parts (112, 114), the connector comprising a hollow body (118), and at the ends of the body «O»-rings (138) adapted to seal against the said parts (112, 114). At one of the ends there are means whereby the body (118) may be secured to one of the said parts and each sealing ring is received in a groove (136) so as to project slightly therefrom and compression means (124, 130) are provided to compress each «O»-ring in its groove (136) so as to force a portion of it out of the groove into a more closely sealing relationship with the part to which it is to be sealed.

EP 0 130 790 A1

0130790

CONNECTORS

This invention relates to connectors.

This invention is an improvement in or modification to the invention described in the specification of my co-pending Patent Application in No. 84303175.8   in which there is described a connector comprising a hollow body,  and at each end of the body a sealing ring and means whereby the body may be secured to two parts that are to be connected together by the connector.   The hollow body is stated to be preferably a cylindrical tube and the securing means are preferably grub screws.   The sealing ring is preferably an "O"-ring.

The said specification also describes a method of connecting together the ends of two pipes, the method comprising inserting the ends of the pipes respectively into opposite ends of a hollow body of a connector as set out above and by means of the securing means,  securing the hollow body to the said ends of the pipes.

According to the present invention there is provided a connector as set forth above wherein each sealing ring is an "O"-ring and is received in a groove within the body so as to project slightly therefrom and wherein compression means are provided to compress each "O"-ring in its groove so as to force a portion of it out of the groove into a more close sealing relationship with the part to which it is to be sealed.   The compression means preferably comprises a rigid circular member defining one wall of the groove and actuating means operatively

0130790

engaging the circular member to move it axially towards the other wall of the groove to reduce the width of the groove.

Preferably there are provided clamping means at each end of the hollow body and means for moving the clamping means towards the body, the circular member being moved by, and preferably forming part of, the said clamping means, and the said clamping means forming the said actuating means. The said other wall of the groove may be an end face of a sleeve within the hollow body or it may be a shoulder at the end of a part within the body. Securing screw means may pass through the clamping means to secure that end of the connector to the part to which it is sealed.

In a modification, the groove is formed in the material of the body and the compression means comprises a rigid, preferably multi-part, circular member within the groove and the actuating means extends through the housing to act on the circular member to move it axially towards a remote side of the groove to reduce the width of the groove. Such actuating means may preferably comprise screw means that preferably extends radially of the hollow body and in use engages the circular member, that is preferably provided with an inclined shoulder against which an inclined part, normally the end, of the screw means acts, to force the circular member towards the said remote side of the groove. This screw means may conveniently comprise the means whereby the connector is secured to the part to which that end of the connector is sealed. There is preferably provided at least one actuating means for each of the parts of the circular member.

The compressed "O"-ring may, in addition or as an alternative to the means above desribed, comprise the means whereby the connector is secured to the part to which it is to be sealed.

According to another aspect of the invention there is provided a method of connecting together the ends of two pipes using a connector as set out above, the method comprising placing the "O"-rings into their respective grooves, inserting the circular members into the grooves beside the "O"-rings, inserting the ends of the pipes respectively into opposite ends of a holow body of a connector, and then operating the actuating means to force the circular member towards the said remote side of the groove thereby causing the "O"ring to engage agains the end of the pipe to seal securely thereagainst.

Embodiments of the invention will now be described by way of example with reference to the accompanying drawings.

In the drawings:-

Figure 1 is a side view partially in section of a connector of the invention with parts in different amounts of adjustment,

Figure 2 is a cross-section through a modified connector which is similar to that of Figure 1 but is formed in two parts,

Figure 3 is a similar view of a modified connector of the invention,

Figure 4 is a similar view of a further connector of the invention, and

Figure 5 is a detail of a groove of the invention.

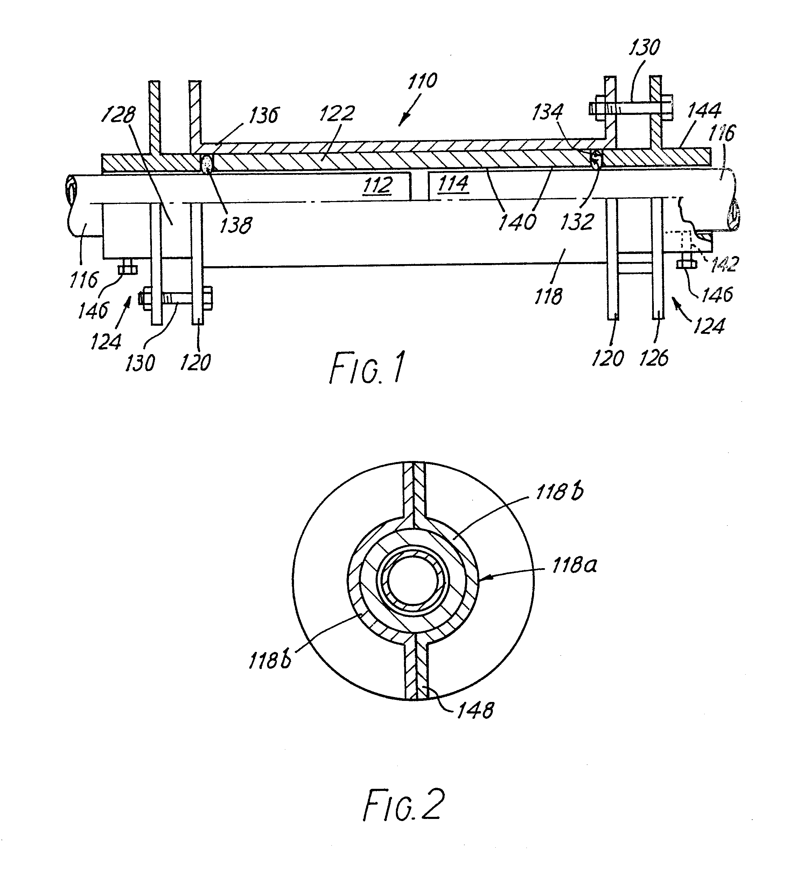

Referring now to Figure 1 there is shown a connector 110 of the invention located in position between the ends 112 and 114 of two water carrying pipes 116 having an outside diameter in excess of 50mm (2 inches) for conveying water at about mains pressure.

The connector 110 comprises a mild steel, cylindrical tubular body member 118 having a pair of end flanges 120 at each end. Within the connector 110 is a hard plastics sleeve 122. End clamps 124 are provided at each end of the connector 110. These end clamps 124 are each generally of the same radial dimensions as the sleeve 122 and have an external flange 126 at its inner end so that there is a projecting portion 128 extending inwardly from the flange 120. Registering bores are provided in the flanges 120 and 126. Bolts 130 pass through these bores and are capable of moving the the clamps 124 inwardly of the connector 110.

The facing surfaces 132 and 134 of the sleeve 122 and the portions 126 are radial and with the inner wall of the body member 118 define circumferential grooves 136. Fitting within the grooves 136 are respectively a pair of "O"-ring seals 138 of such size that each projects about 13% of its sectional diameter into the bore 140 of the sleeve 122. The width of each groove 120 is greater than that of the said diameter of the "O"-ring.

Three radial tapped bores 142 are provided in the outer shank portion 144 of each of the end clamps 124. Clamping bolts 146 pass through the bores and these can be tightened down to clamp against the pipes 116.

In use, the ends 112 and 114 of the pipes 116 are cleaned, and preferably sandpapered or ground smooth. The clamps 124 and then the "O"-rings 138 are fitted over the ends of the pipes 116. The sleeve 122 and the body member 118 is placed in position and manipulated so that the butting ends of the pipes 116 are located between the ends of the sleeve 122. The clamps 124 are moved inwardly moving the "O"-rings 138 with them. The bolts 130 are positioned and engaged by suitable nuts and are tightened. As this occurs, the inner portions 126 are forced axially inward, the reducing the width of the grooves 136 and compressing the "O"-rings 138 thereby distorting them so that a substantial part of the O"-rings 138 project into the bore 140 and engage the pipe ends more securely (as is shown in the left hand side of the drawing) to seal thereagainst.

Thereafter, the bolts 146 are tightened so that the connector 110 is now firmly secured to the pipes 116.
We have found that this arrangement provides a substantially permanent water-tight connection between two ends of a water carrying pipe of substantial outside diameters (i.e. from about

0130790

50mm and upwards to about 1100mm). Further we have found that with this arrangement, it is possible to use "O"-rings of substantial inner diameter which can be easily manipulated and moved over the pipe ends when they (the "O"-rings) are at rest and which when compressed provide an excellent seal against the pipe ends.

Reference is now made to Figure 2 wherein the body member 118a is split along a diameter into two parts 118b. A suitable longitudinal flange 148 is provided along each longitudinal edge of the parts 118b and these flanges 144 bolted together. In this way the fitting of the body member 118a over the pipe ends 112 and 114 and the sleeve 122 may be facilitated. It will be noted that the body member 118a (as is the body member 118 in the first described embodiment) is not subject to hydraulic pressure and therefore sealing of the flanges 148 is not essential.

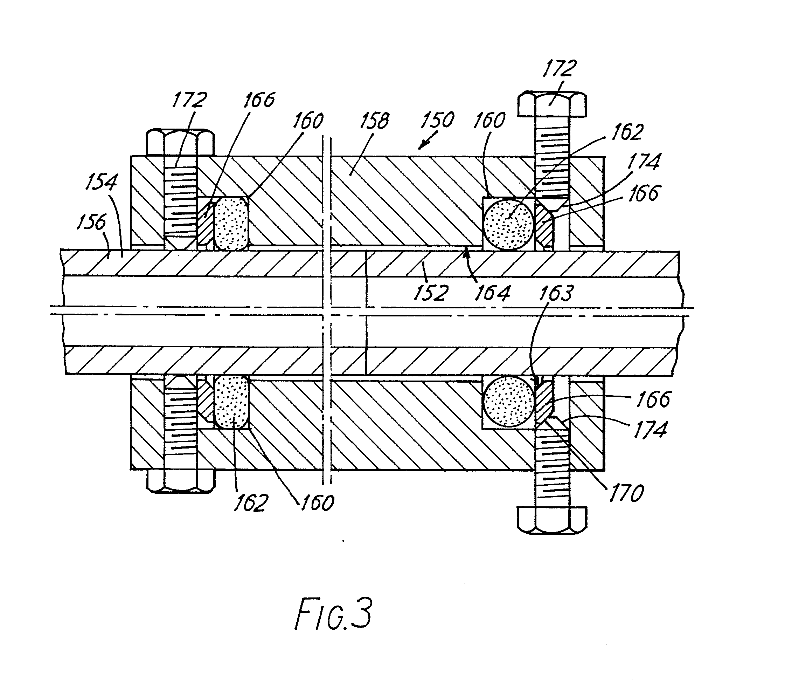

Referring now to Figure 3 there is shown a modified connector 150 of the invention located in position between the ends 152 and 154 of two water carrying pipes 156 similar to pipes 116. The connector 150 comprises a mild steel, cylindrical tubular body member 158 having a pair of internal grooves 160 formed in the material thereof near each end. (The grooves 160 have the shape that will be described with reference to Figure 5. Fitting within the grooves 160 are respectively a pair of "O"-ring seals 162 of such depth that each projects only about 13% of its sectional diameter into the bore 164 of the member 158. The width of the each groove 160 is greater than that of the said diameter of the "O"-ring and there is received within the groove, on the outside of the "O"-ring 162, a circular ring member 166. This ring member 166 has a chamfered inner corner 168 and a similarly chamfered outer corner 170 which is at the corner of the groove 160. The ring member 166 is formed in three similar parts for the purpose that will become apparant. The width of the groove 160 less the thickness of the ring member 166 is about the same as the said diameter of the "O"-ring 162.

On the outer sides of each of the grooves 160 are a number (at least three and conveniently six) tapped bores in which are received bolts 172. Each bolt 172 has an external shoulder 174 at its end and its end face 174 is recessed so that it might bite into the pipe ends as will be described.

In use, the ring members 166 are inserted into their grooves 160. The "O"-rings 162 are then located into the grooves 160. The bolts 172 are placed in the bores and each screwed in until its shoulders 174 engage the chamfered inner corner 168. The ends 152 and 154 of the pipes 156, which are clean and preferably sandpapered or ground smooth, are inserted into the ends of bore 164 of the member 158 until they are engaged by the "O"-ring seals 162 and are thereafter pushed somewhat deeper into the member 158 until their ends abut. The parts are now in the positions shown in the right hand side of the drawing.

cylindrical tubular body member 190 connected together by a pairs of longtudinally extending flanges 192 and having end flanges 194. Within the connector 180 is a hard plastics The bolts 172 are then tightened up. As this occurs, the shoulders 174 run down the corners 168 forcing the ring members 164 axially inward. This continues until the end faces 174 of the bolts engage and bite into the pipe ends 152 (or 154).

The axially inward movement of the ring members 166 is such as to compress the "O"-rings 162 distorting them so that a substantial part of the O"-rings 162 project into the bore 164 and engage the pipe ends more securely (as is shown in the left hand side of the drawing).

We have found that this arrangement also provides a substantially permanent water-tight connection between two ends of a water carrying pipe·of substantial outside diameters (i.e. from about 120mm and upwards to about 1500mm).

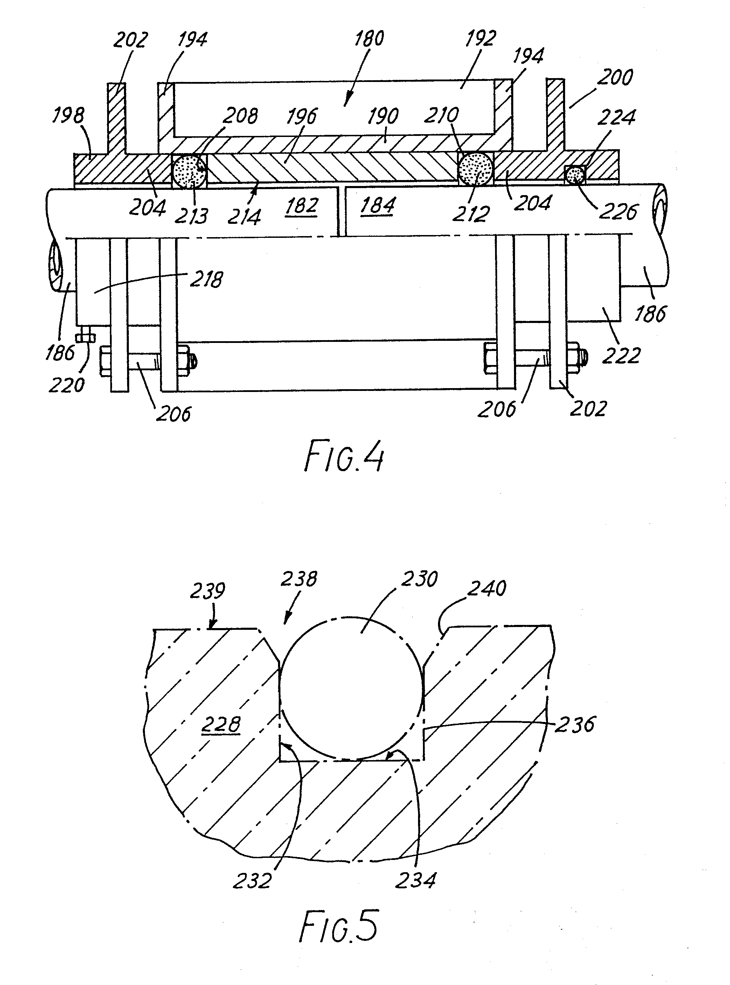

Referring now to Figure 4, there is shown a connector of the invention in the form of an expansion joint 180 located in position between the ends 182 and 184 of two steam carrying pipes 186 and 188 the ends of which are spaced from one another. This connector is substantially identical with the connector 110a described with reference to Figure 2. In this embodiment, the connector 180 comprises a two-part mild steel, cylindrical tubular body member 190 connected together by a pairs of longitudinally extending flanges 192 and having end flanges 194. Within the connector 180 is a hard plastics sleeve 196. End clamps 198 and 200 are provided at each end of the connector 180. The end clamp 198 is substantially the same as the end clamps 124. The end clamp 200 is also substantially the same differring only in the features which will become apparant. The end clamps 198 and 200 each have an external flange 202 at its inner end with an inwardly projecting portion 204. Bolts 206 pass through registering bores in the flanges 196 and 202 are capable of forcing the end clamps inwardly of the body 190.

The facing surfaces 208 of the sleeve 196 and the inwardly projecting portions 204 are radial and with the inner wall of the body member 190 define circumferential grooves 210. A pair of "O"-ring seals 212 and 213 respectively fit within the grooves 210 and similar to the seals 162 project about 13% of its sectional diameter into the bore 214 of the sleeve 196.

Three radial tapped bores are provided in the outer shank portion 218 of the end clamp 198. Clamping bolts 220 pass through the bores and these can be tightened down to secure the end clamp 198 against the pipe 186.

The shank portion 222 of the end clamp 200 is provided with an internal groove 224 within which is received an "O"-ring seal 226 which projects beyond the groove 224 in the normal manner.    There are no clamping bolts provided for this end clamp 200.

The "O"-ring seals 212 are formed of a heat resisting rubber such as the synthetic rubber sold under the name "Viton" by du Pont. The seal 226 comprises a "Viton" "O"-ring encapsulated in polytetrafluoroethylene.

The connector 190 is used in the much the same way as the connector 110 save that the end clamp 200 is first placed over an end 184 of a pipe 188 with the "O"-ring 226 being forced thereover.    Thereafter the parts are placed on the pipes as has been fully described above.    The bolts 220 are tightened so that the end clamp 198 is now firmly secured to the pipe 186

The expansion joint 180 permits relative movement of the two ends of the two pipes 186 and 188 due to heating and cooling. The "O"-ring seal 212 will provide a satisfactory seal between the body member 190 and the pipe 186 even though there will be relative axial movement therebetween.    The seal 226 will serve as a wiper seal to prevent the ingress of dust and detritus into the connector 180 which may effect the life of the adjacent              "O"-ring              seal              212.

Thus the expansion joint 180 will serve as a very satisfactory expansion joint for use with steam pipes where the temperature of the steam does not exceed about 200°C.

In each of the embodiments above described, the or each groove in which the "O"-ring is contained (whether it is the multi-part groove or normally formed groove) may be of the shape shown in Figure 5.

For convenience, in describing Figure 5, there is shown a carrying member 228 which may be a one piece member or may comprise a number of parts as described above. There is an "O"-ring numbered 230 and a groove 232.

The groove 232 has a rectangular section base portion 234 with its sides 236 thereto and an outwardly diverging mouth 238. The mouth 238 is formed by two a pair of inclined surfaces 240 which extend from the sides 236 to the surface 239 in which the groove is formed, being inclined to the surface 239 at 120°. The width of the groove 232 is 95% of the diameter of the "O"-ring 230. The depth of the groove 232 is 80% of such diameter and the height of sides 236 is 66,66% of such diameter. (In this specification a reference to the diameter of the "O"-ring is a reference to such diameter when the "O"-ring is at rest and not under any pressure.) The junctions of the sides 236 of the groove with its base 234 and with the inclined surfaces 240 and as well as the junctions of the such surfaces 240 and the surface of the carrying member 10 may be relatively sharp or may be radiussed with a small radius. I have found that the shape of the groove as described above enables the "O"-ring to operate extremely efficiently as well as facilitating the insertion of the "O"-ring therein.

The invention is not limited to the precise constructional details hereinbefore described and illustrated in the accompanying drawings. For example, by substantially increasing the size of the housing member between the portions containing the sealing "O"-rings and the sleeve therein, the connector may also act as an accumulator for absorbing water hammer.

CLAIMS

1   A connector for connecting together in sealed manner two parts,
the connector comprising a hollow body,  and at the ends of the
body "O"-rings adapted to seal against the said parts and at
one of the ends means whereby the body may be secured to one of
the said parts characterised in that each sealing ring is an
"O"-ring and is received in a groove so as to project slightly
therefrom and in that compression means are provided to
compress each "O"-ring in its groove so as to force a portion
of it out of the groove into a more close sealing relationship
with the part to which it is to be sealed.

2   A connector as claimed in claim 1 wherein the compression means
comprises a rigid circular member defining one wall of the
groove and actuating means operatively engaging the circular
member to move it axially towards the other wall of the groove
so as to reduce the width of the groove.

3   A connector as claimed in claim 1 or 2 further comprising
clamping means at each end of the hollow body and means for
moving the clamping means towards the body, the circular member
being moved by  the said clamping means,

4   A connector as claimed in claim 3 wherein the circular member
forms    part of the said clamping means

5   A connector as claimed in claim 4 wherein the clamping means
also forms the said actuating means.

6    A connector as claimed in claim 2 wherein the said other wall of the groove is an end face of a sleeve within the hollow body.

7    A connector as claimed in claim 2 wherein the said other wall of the groove is a shoulder at the end of a part within the body.

8    A connector as claimed in claim 1 wherein securing screw means passes through one or both of the clamping means to secure that end of the connector to the part to which it is sealed.

9    A connector as claimed in claim 1 wherein the groove is formed in the material of the body and the compression means comprises a rigid circular member within the groove and the actuating means extends through the housing to act on the circular member to move it axially towards a remote side of the groove to reduce the width of the groove.

10   A connector as claimed in claim 1 wherein the circular member is a multi-part member.

11   A connector as claimed in claim 1 wherein the actuating means comprises screw means that engage the circular member to force the circular member towards the said remote side of the groove.

0130790

12 A connector as claimed in claim 11 wherein the screw means extend radially of the body and are provided with inclined parts which engages an inclined shoulder on the circular member.

13 A connector as claimed in claim 1 wherein the securing means is provided for securing the hollow body to one only of the said parts and wherein the body is a sliding fit over the other of the said parts.

14 A connector as claimed in claim 13 wherein a wiper seal is provided as an additional seal over the other of the said parts.

15 A connector as claimed in claim 1 wherein the section of the groove is rectangular at the base and has inclined surfaces leading to the open end of the groove.

16 The combination of a connector as claimed in any one of the preceding claims with a pair of parts wherein the parts are inserted respectively into the opposite ends of the hollow body, wherein the sealing means respectively seal against the said parts and wherein at least one of the parts is connected to the hollow body by the said securing means.

FIG. 1

FIG. 2

FIG.3

FIG.4

FIG.5

0130790

European Patent
Office

**EUROPEAN SEARCH REPORT**

Application number

EP 84 30 4374

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int. Cl. 3) |
| X | LU-A- 41 385 (MAMY)<br><br>* Figures * | 1-5,7, 9,11, 16 | F 16 L 21/04<br>F 16 L 25/00 |
| A | | 12 | |
| X | US-A-2 747 900 (SMITH)<br><br>* Figures * | 1-3,6, 9,11, 16 | |
| X | US-A-4 092 036 (SATO)<br><br>* Figures * | 1-4,7, 8,11, 16 | |
| | | | TECHNICAL FIELDS SEARCHED (Int. Cl. 3) |
| X | NL-C- 39 091 (MANNESMANN RÖHREN-WERKE)<br><br>* Figures * | 1-3,5, 7,9,11 ,12,16 | F 16 L |
| X | GB-A- 456 914 (THE LEAD WOOL COMP. LTD.)<br><br>* Figures * | 1,2,7, 9,11, 12,16 | |
| X | US-A-2 567 243 (SMITH)<br><br>* Figures * | 1-3,5, 7,9-11 ,16 | |

The present search report has been drawn up for all claims

| Place of search | Date of completion of the search | Examiner |
|---|---|---|
| THE HAGUE | 20-09-1984 | HUBEAU M.G. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82